# FASCICULE DE BREVET EUROPEEN

(11) **EP 0 738 037 B1**
(45) Date de publication et mention de la délivrance du brevet: **15.09.1999**
(21) Numéro de dépôt: 96400780.1
(22) Date de dépôt: 11.04.1996
(51) Int. Cl.: H02P 9/30, H02J 7/14

(54) **Circuit d'excitation d'alternateur notamment de véhicule automobile, et régulateur et alternateur l'incorporant**
Erregerschaltkreis für einen Wechselstromgenerator, insbesondere für Kraftfahrzeuge und Regler mit einem solchen Wechselstromgenerator
Excitation circuit for an alternator especially for motor vehicles and controller with an alternator containing it

(30) Priorité: 13.04.1995 FR 9504464
(43) Date de publication de la demande: 16.10.1996
(73) Titulaire: VALEO EQUIPEMENTS ELECTRIQUES MOTEUR, 94000 Créteil (FR)
(72) Inventeur: Pierret, Jean-Marie, 75012 Paris (FR); Brandy, Frédéric, 92160 Antony (FR)
(74) Mandataire: Le Forestier, Eric

(56) Documents cités:
- US-A- 4 636 706
- US-A- 4 733 159
- US-A- 5 325 044

## Description

La présente invention concerne d'une façon générale un circuit de charge d'une batterie par un alternateur notamment dans un véhicule automobile, et plus particulièrement un nouveau circuit d'excitation d'alternateur délivrant un signal de réponse en excitation au moteur du véhicule.

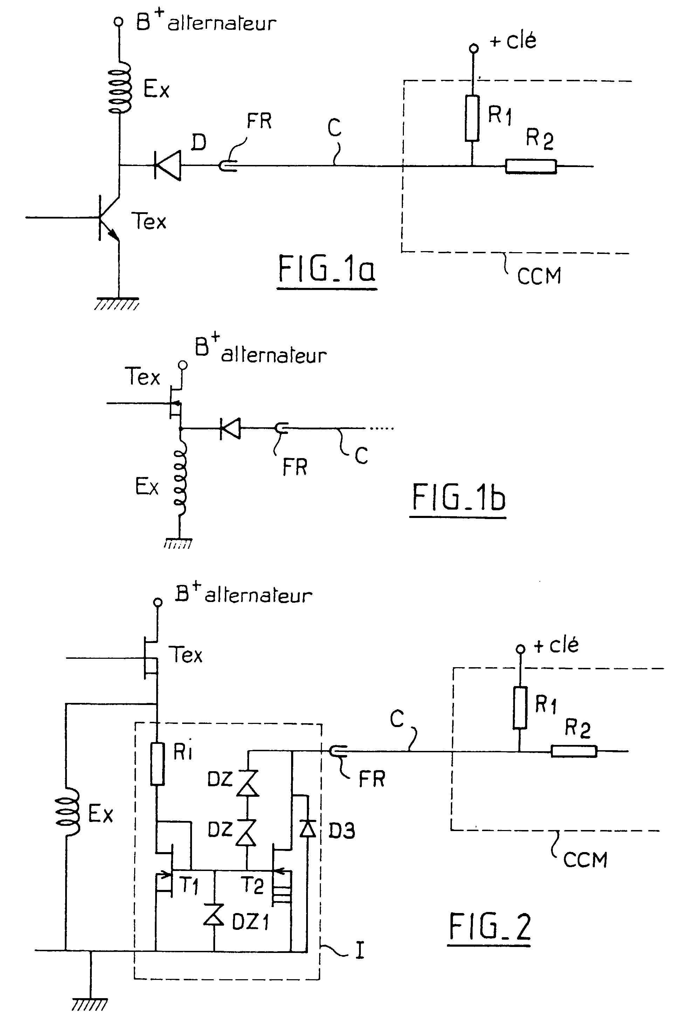

On a représenté sur la figure 1a un circuit où l'on a représenté l'enroulement d'excitation Ex de l'alternateur, dont une borne est reliée à la tension positive de sortie de l'alternateur ("B+ alternateur") et dont l'autre borne est reliée au collecteur d'un transistor de puissance de commande d'excitation Tex. L'émetteur de Tex est relié à la masse, tandis que sa base reçoit un signal de commande d'excitation délivré par un circuit régulateur connu en soi.

Le collecteur de Tex est également relié à la cathode d'une diode D dont l'anode est reliée à une prise de sortie FR destinée, par l'intermédiaire d'un câble de raccordement C, à fournir à un calculateur de contrôle de moteur CCM un signal représentatif des variations en fréquence et/ou en rapport cyclique de l'excitation appliquée par l'enroulement Ex.

Dans le calculateur CCM, on trouve une résistance R1 dite de "pull-up" reliée à la tension positive "+Clé" et une résistance série R2. Un tel calculateur équipe maintenant de plus en plus souvent les véhicules modernes, notamment pour gérer la consommation des divers équipements électriques du véhicule en fonction de l'état de l'alternateur, et notamment de sa disponibilité pour alimenter avec un courant suffisant des charges additionnelles telles ques des bougies de préchauffage d'eau.

Un régulateur comportant un tel circuit de sortie est appelé "Low-side", dans la mesure où le transistor de commande Tex se trouve entre l'inducteur Ex et la masse.

La diode D a pour objet d'éviter une excitation permanente de l'alternateur dans le cas où, accidentellement, le câble C viendrait en court-circuit avec la masse. La résistance R1 est prévue à cause de la présence de cette diode.

On connaît également un montage dit High-side", représenté sur la figure 1b.

Le transistor de commande d'excitation Tex (cette fois-ci un transistor MOS) est monté entre l'enroulement Ex et la tension positive B+ de l'alternateur.

Dans ce cas, la diode D a pour objet d'éviter la suppression totale de l'excitation dans le cas où le câble de liaison C vient en court-circuit avec la masse.

Cependant, le signal délivré sur le câble C est dans ce cas incompatible avec le calculateur ce la figure 1a, dans la mesure où les signaux sont inversés.

Le montage de la figure 1a présente par ailleurs certains inconvénients par rapport à celui de la figure 1b. Plus précisément, lorsque l'alternateur est à l'arrêt, l'enroulement Ex se trouve de façon permanente au potentiel positif B+, et ceci peut provoquer, lorsque l'alternateur est exposé à des brouillards salins, à une corrosion extrêmement rapide de certains composants de l'alternateur.

Ce problème n'existe pas dans le montage de la figure 1b, car l'inducteur est dans ce cas au potentiel de masse lorsque l'alternateur est à l'arrêt.

En outre, dans le montage de la figure 1a, un court-circuitage de la borne basse de l'enroulement Ex sur la masse provoque une excitation excessive de l'alternateur, et par là une surcharge de la batterie, tandis que dans le cas de la figure 1b, le court-circuitage sur la masse de la borne haute de l'enroulement Ex ne provoque pas ce phénomène.

La présente invention a pour objet d'offrir, d'une manière simple, économique et fiable, la possibilité d'utiliser un circuit d'excitation du type de celui représenté sur la figure 1b avec un calculateur de contrôle moteur initialement conçu pour recevoir des signaux issus d'un circuit d'excitation de la figure 1a. En d'autres termes, la présente invention vise à proposer un alternateur peu sensible à la corrosion du fait des brouillards salins, et offrant peu de risque de surcharge de la batterie, tout en évitant d'avoir à modifier ou à remplacer le calculateur de contrôle moteur pré-existant.

A cet effet, l'invention propose un circuit d'excitation d'un alternateur notamment de véhicule automobile, du type capable d'appliquer un signal indicateur à un dispositif de contrôle du moteur du véhicule, le circuit d'excitation comprenant un enroulement d'excitation dont une première borne est reliée à la masse et un interrupteur commandé monté entre la seconde borne de l'enroulement d'excitation et une tension d'alimentation positive, caractérisé en ce qu'il comprend en outre un circuit inverseur protégé dont une entrée est reliée à ladite seconde borne de l'enroulement d'excitation et dont une sortie est reliée à une borne de raccordement audit dispositif de contrôle.
- Dans le cas où le dispositif de contrôle comprend dans un étage d'entrée une résistance de tirage vers une tension positive, le circuit inverseur comprend un montage de composants semi-conducteurs formant miroir de courant à multiplication de courant sans alimentation.
- le miroir de courant comprend au moins un composant semi-conducteur relié à la seconde borne de l'enroulement d'excitation par une résistance d'entrée et un transistor relié directement à ladite borne de raccordement.
- le circuit inverseur comprend entre les bornes d'entrée et de sortie de courant du transistor une diode de protection montée en inverse.
- le circuit inverseur comprend entre une borne de commande du transistor et une borne d'entrée de courant du transistor au moins une diode Zéner de protection (DZ).
- ledit composant semi-conducteur au moins prévu comprend un autre transistor.
- les deux transistors sont de type MOS et reliés entre eux par leurs grilles, et il est prévu entre lesdites grilles et la masse une diode Zéner.
- les deux transistors sont de type bipolaire, et il est prévu entre l'émetteur du transistor relié à la borne de raccordement et la masse une résistance de limitation de courant.
- ledit autre composant semi-conducteur au moins prévu comprend au moins une diode montée dans le sens conducteur entre la résistance d'entrée et la masse.

L'invention propose également un circuit régulateur de la tension de charge d'une batterie par un alternateur, notamment dans un véhicule automobile, caractérisé en ce qu'il comprend un circuit d'excitation tel que défini ci-dessus, ainsi qu'un alternateur comprenant un tel circuit régulateur.

D'autres aspects, buts et avantages de la présente invention apparaîtront mieux à la lecture de la description détaillée suivante de formes de réalisation préférées de celle-ci, donnée à titre d'exemple non limitatif et faite en référence aux dessins annexés, sur lesquels :
la figure 1a illustre un montage d'excitation "Low-side" de la technique antérieure, associé à un calculateur de contrôle moteur,
la figure 1b illustre un montage d'excitation "High-side" de la technique antérieure,
la figure 2 est un schéma d'un circuit selon une première forme de réalisation de l'invention,
la figure 3 illustre l'adjonction d'une partie du circuit de la figure 2 à un circuit intégré de régulation pré-existant,
la figure 4 illustre le brochage d'un circuit intégré de régulation incorporant sur la puce de silicium la partie adjointe sur la figure 3,
la figure 5 est un schéma d'un circuit selon une deuxième forme de réalisation de l'invention, et
la figure 6 est un schéma d'un circuit selon une troisième forme de réalisation de l'invention.

En référence à la figure 2, on a représenté un circuit d'excitation "High-side" comprenant un enroulement d'excitation Ex dont une borne est reliée à la masse et dont l'autre borne est reliée à la source d'un transistor de commande d'excitation Tex de type MOS. Le drain de Tex est relié à la tension continue positive B+ au niveau de l'alternateur, tandis que sa grille reçoit un signal de commande d'excitation des étages amont d'un circuit régulateur conventionnel.

La source de Tex est reliée à l'entrée d'un circuit inverseur, globalement désigné par I, dont la sortie est reliée à la prise FR.

Selon une caractéristique avantageuse de l'invention, on réalise un inverseur I ne nécessitant aucune tension d'alimentation positive.

Ainsi le circuit inverseur de la figure 2 comprend deux transistors MOS T1 et T2 montés en miroir de courant. Ce miroir de courant a pour objet de limiter le courant de sortie, traversant le transistor T2, et de protéger T2 contre les courts-circuits éventuels avec un potentiel positif au niveau de la prise de sortie FR.

La résistance Ri a pour objet, lorsque le transistor de commande d'excitation Tex est passant, de limiter, à une valeur par exemple de l'ordre de 1 mA, le courant qui traverse T1. T2 est choisi avec une surface de source sensiblement supérieure à celle de T1, de manière à permettre à T2 de délivrer un courant qui est un multiple de celui qui traverse T1, et par exemple de l'ordre de 40 mA.

Ce courant est suffisant pour charger l'entrée du calculateur CCM, et permet d'assurer une protection de T2 contre les court-circuits.

Le circuit inverseur I de la figure 2 comporte également des moyens de protection contre les décharges électrostatiques. Ces moyens comprennent une diode D3 dont la cathode est reliée au drain de T2 et dont l'anode est reliée à la masse, et a pour objet d'absorber les décharges négatives auxquelles le transistor T2 pourrait être exposé. Cette diode D3 peut être soit un composant spécifique, soit être constituée de la diode caisson du transistor T2, ou encore la diode inverse parasite de T2 dans le cas où, comme illustré, celui-ci est de type MOS.

Les décharges électrostatiques positives sont écrêtées par deux diodes Zéner DZ montées en série entre la grille de T2 et son drain.

En outre, il est prévu une autre diode Zéner DZ1 entre les grilles de T1 et T2 et la masse, de manière à les protéger contre les surtensions d'origine électrostatique.

Ainsi, par le jeu d'un simple miroir de courant à coefficient multiplicateur, on réalise, sans nécessiter de tension d'alimentation positive, un circuit inverseur protégé, apte à délivrer sur la prise FR le même signal que celui qui serait délivré par un circuit d'excitation du type de celui représenté sur la figure 1a, avec en outre un courant disponible en sortie relativement important.

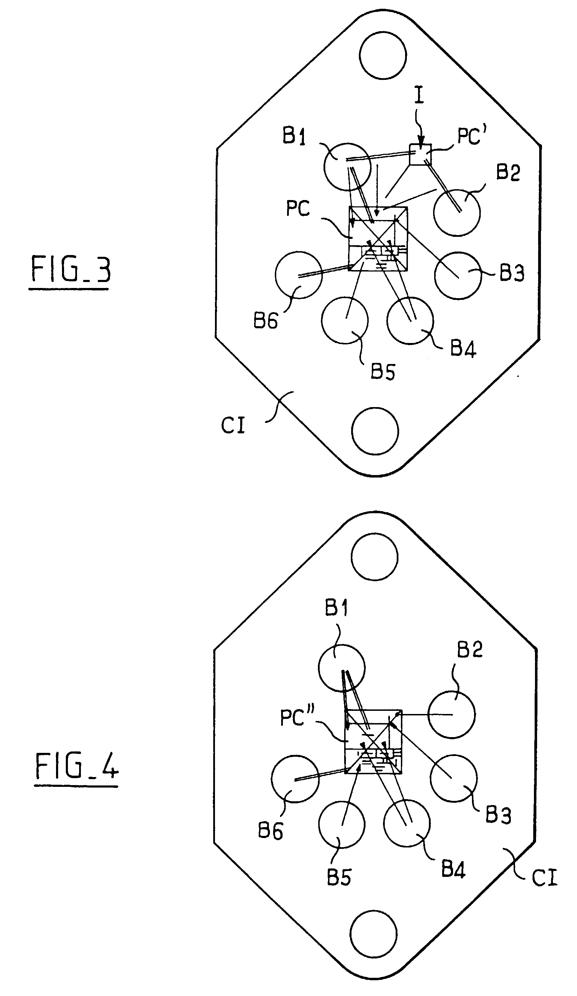

La figure 3 illustre un circuit intégré de régulation conventionnel, désigné par CI, incorporant une puce de silicium PC comportant les circuits de filtrage, de tension de référence et de comparaison conventionnels ainsi que le transistor de puissance Tex.

Ce circuit intégré comporte six broches de connexions affectées comme suit :
B1 : borne haute de l'enroulement d'excitation (source de Tex)
B2 : sortie vers prise FR
B3 : Sortie de commande de lampe témoin de défauts
B4 : B+ alternateur
B5 : entrée phase 1
B6 : entrée phase 2

Dans le cas de la figure 3, l'inverseur I est réalisé sous la forme d'une petite puce de silicium PC' en complément de la puce principale PC et placée à son voisinage. Pour mettre l'inverseur I en circuit, il suffit de relier sa borne d'entrée à la broche B1, sa borne de sortie à la broche 32, tandis que sa masse est prise directement sur l'embase du circuit intégré C1. Grâce au fait qu'aucune tension d'alimentation n'est nécessaire, la connexion de l'inverseur I est donc simplifiée.

La figure 4 illustre le cas ou une puce unique PC" regroupe les composants des puces PC et PC' de la figure 3, le brochage étant le même que dans le cas de la figure 3.

Selon une autre forme de réalisation (non illustrée), le circuit inverseur peut être prévu sous forme d'un circuit spécifique, physiquement distinct du circuit intégré principal CI, qui peut être placé par exemple sur le porte-balais de l'alternateur.

On observera ici que le circuit inverseur selon la présente invention peut être associé à un circuit régulateur de type tout à fait quelconque, soit de type classique, soit à charge progressive, soit à contrôle de vitesse, etc...

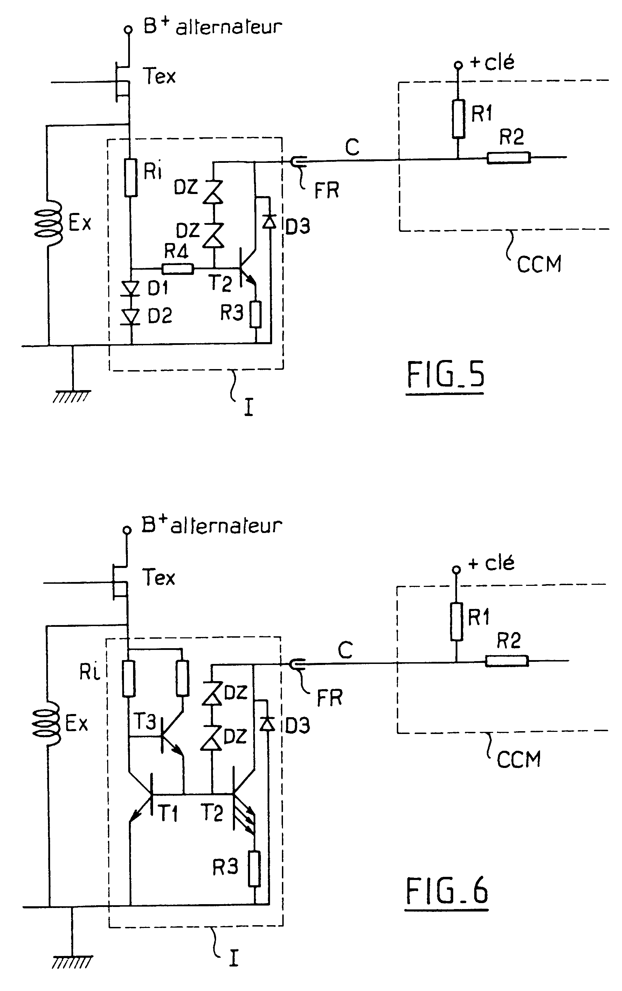

La figure 5 illustre une deuxième forme de réalisation du circuit inverseur.

Il se distingue de celui de la figure 2 par le fait que le transistor T1 est remplacé par deux diodes bipolaires D1 et D2 montées en série dans le sens conducteur entre la résistance Ri et la masse. De la sorte, lorsque Tex est passant, le cumul des deux tensions de jonction de ces diodes fixe le potentiel de base de T2, qui est dans ce cas un transistor bipolaire NPN.

Le courant de collecteur de T2 est dans ce cas limité par une résistance R3 branchée entre son émetteur et la masse, la valeur de cette résistance pouvant être de l'ordre de 10 Ω.

Dans ce circuit, la diode Zéner DZ1 est supprimée car sa fonction de protection est remplie par les diodes D1 et D2. Les autres composants de protection, à savoir les deux diodes Zéner DZ et la diode D3, sont en revanche conservés.

Par ailleurs, une résistance R4 limite le courant dans D1 et D2 lorsque les diodes zener DZ sont rendues passantes sous l'effet d'une décharge électrostatique.

La figure 6 illustre une troisième forme de réalisation du circuit inverseur, conçue pour que la limitation du courant soit moins dépendante de la température que dans le cas de la figure 5.

Plus précisément, on comprend que, lors de variations importantes de température, les caractéristiques des composants Ri, D1, D2 et R3 du circuit de la figure 5 dérivent de telle manière qu'à mesure que la température s'accroît, le courant maximal pouvant être délivré par T2 diminue.

Le circuit de la figure 6 comprend un miroir de courant constitué par des transistors T1 et T2 de type bipolaire, mais ce miroir est déséquilibré par une résistance R3 de faible valeur, placée entre l'émetteur de T2 et la masse et apte à compenser l'effet de la résistance d'entrée Ri.

Du fait que le transistor T2, multi-émetteurs, a une densité de courant plus faible que T1, le courant de collecteur a tendance à s'accroître avec la température, ce qui compense bien la diminution précitée.

Par ailleurs, il est prévu dans le circuit de la figure 6 un autre transistor bipolaire T3 dont la base est reliée au collecteur de T1, dont l'émetteur est relié à la base de T1 et dont le collecteur est relié à l'enroulement d'excitation. L'objet de ce circuit complémentaire est d'éviter que les courants de base de T1 et T2 traversent la résistance Ri, ce qui provoquerait une diminution sensible et mal contrôlée du courant délivré par T2 en sortie de l'inverseur, ce qui va à l'encontre du but recherché.

## Revendications

1. Circuit d'excitation (Tex, Ex) d'un alternateur notamment de véhicule automobile, du type capable d'appliquer un signal indicateur à un dispositif de contrôle (CCM) du moteur du véhicule, le circuit d'excitation comprenant un enroulement d'excitation (Ex) dont une première borne est reliée à la masse et un interrupteur commandé (Tex) monté entre la seconde borne de l'enroulement d'excitation et une tension d'alimentation positive (B+), caractérisé en ce qu'il comprend en outre un circuit inverseur protégé (I) dont une entrée est reliée à ladite seconde borne de l'enroulement d'excitation et dont une sortie est reliée à une borne de raccordement (FR) audit dispositif de contrôle.

2. Circuit selon la revendication 1, pour un dispositif de contrôle comprenant dans un étage d'entrée une résistance (R1) de tirage vers une tension positive, caractérisé en ce que le circuit inverseur comprend un montage de composants semi-conducteurs (T1, T2; D1, D2, T2) formant miroir de courant à multiplication de courant sans alimentation.

3. Circuit selon la revendication 2, caractérisé en ce que le miroir de courant comprend au moins un composant semi-conducteur (T1; D1, D2) relié à la seconde borne de l'enroulement d'excitation (Ex) par une résistance d'entrée (Ri) et un transistor (T2) relié directement à ladite borne de raccordement (FR).

4. Circuit selon la revendication 3, caractérisé en ce que le circuit inverseur (I) comprend entre les bornes d'entrée et de sortie de courant du transistor (T2) une diode de protection (D3) montée en inverse.

5. Circuit selon la revendication 3 ou 4, caractérisé en ce que le circuit inverseur (I) comprend entre une borne de commande du transistor (T2) et une borne d'entrée de courant du transistor (T2) au moins une diode Zéner de protection (DZ).

6. Circuit selon l'une des revendications 3 à 5, caractérisé en ce que ledit composant semi-conducteur au moins prévu comprend un autre transistor (T1).

7. Circuit selon la revendication 6, caractérisé en ce que les deux transistors (T1, T2) sont de type MOS et reliés entre eux par leurs grilles et en ce qu'il est prévu entre lesdites grilles et la masse une diode Zéner (DZ1).

8. Circuit selon la revendication 6, caractérisé en ce que les deux transistors (T1, T2) sont de type bipolaire et en ce qu'il est prévu entre l'émetteur du transistor (T2) relié à la borne de raccordement et la masse une résistance (R3) de limitation de courant.

9. Circuit selon la revendication 6, caractérisé en ce que ledit autre composant semi-conducteur au moins prévu comprend au moins une diode (D1, D2) montée dans le sens conducteur entre la résistance d'entrée (Ri) et la masse.

10. Circuit régulateur (CI) de la tension de charge d'une batterie par un alternateur, notamment dans un véhicule automobile, caractérisé en ce qu'il comprend un circuit d'excitation selon l'une des revendications 1 à 9.

11. Alternateur notamment pour véhicule automobile, caractérisé en ce qu'il comprend un circuit régulateur (CI) selon la revendication 10.

## Patentansprüche

1. Erregerschaltkreis (Tex, Ex) für einen Wechselstromgenerator, insbesondere für Kraftfahrzeuge, der ein Anzeigesignal an eine Vorrichtung zur Kontrolle (CCM) des Fahrzeugmotors anlegen kann, wobei der Erregerschaltkreis eine Erregerwicklung (Ex), deren erste Klemme mit der Masse verbunden ist, und einen gesteuerten Schalter (Tex) umfaßt, der zwischen der zweiten Klemme des Erregerschaltkreises und einer positiven Speisespannung (B+) angeordnet ist, **dadurch gekennzeichnet,** daß er außerdem eine geschützte Inverterschaltung (I) umfaßt, von der ein Eingang mit der besagten zweiten Klemme der Erregerwicklung verbunden ist und von der ein Ausgang mit einer Anschlußklemme (FR) an die besagte Kontrollvorrichtung verbunden ist.

2. Schaltkreis nach Anspruch 1 für eine Kontrollvorrichtung, die in einer Eingangsstufe einen Ziehwiderstand (R1) zu einer positiven Spannung umfaßt, **dadurch gekennzeichnet,** daß die Inverterschaltung eine Schaltungsanordnung von Halbleiter-Bauelementen (T1, T2; D1, D2, T2) umfaßt, die einen Stromspiegelschaltung mit Stromvervielfachung ohne Speisespannung bildet.

3. Schaltkreis nach Anspruch 2, **dadurch gekennzeichnet**, daß die Stromspiegelschaltung wenigstens ein Halbleiter-Bauelement (T1; D1, D2), das mit der zweiten Klemme der Erregerwicklung (Ex) durch einen Eingangswiderstand (Ri) verbunden ist, und einen Transistor (T2) umfaßt, der direkt mit der besagten Anschlußklemme (FR) verbunden ist.

4. Schaltkreis nach Anspruch 3, **dadurch gekennzeichnet,** daß die Inverterschaltung (I) zwischen den Stromeingangs- und Stromausgangsklemmen des Transistors (T2) eine in Sperrichtung geschaltete Schutzdiode (D3) umfaßt.

5. Schaltkreis nach Anspruch 3 oder 4, **dadurch gekennzeichnet,** daß die Inverterschaltung (I) zwischen einer Steuerklemme des Transistors (T2) und einer Stromeingangsklemme des Transistors (T2) wenigstens eine Zener-Schutzdiode (DZ) umfaßt.

6. Schaltkreis nach einem der Ansprüche 3 bis 5, **dadurch gekennzeichnet,** daß das besagte Halbleiter-Bauelement, das wenigstens vorgesehen ist, einen anderen Transistor (T1) umfaßt.

7. Schaltkreis nach Anspruch 6, **dadurch gekennzeichnet,** daß die zwei Transistoren (T1, T2) MOS-Transistoren und durch ihre Gates miteinander verbunden sind und daß zwischen den besagten Gates und der Masse eine Zener-Diode (DZ1) vorgesehen ist.

8. Schaltkreis nach Anspruch 6, **dadurch gekennzeichnet**, daß die zwei Transistoren (T1, T2) Bipolartransistoren sind und daß zwischen dem Emitter des mit der Anschlußklemme verbundenen Transistors (T2) und der Masse ein Strombegrenzungswiderstand (R3) vorgesehen ist.

9. Schaltkreis nach Anspruch 6, **dadurch gekennzeichnet**, daß das besagte andere Halbleiter-Bauelement, das wenigstens vorgesehen ist, wenigstens eine Diode (D1, D2) umfaßt, die in Durchlaßrichtung zwischen dem Eingangswiderstand (Ri) und der Masse geschaltet ist.

10. Reglerschaltung (CI) für die Ladespannung zum Laden einer Batterie durch einen Wechselstromgenerator, insbesondere in einem Kraftfahrzeug, **dadurch gekennzeichnet,** daß sie einen Erregerschaltkreis nach einem der Ansprüche 1 bis 9 umfaßt.

11. Wechselstromgenerator, insbesondere für Kraftfahrzeuge, **dadurch gekennzeichnet,** daß er eine Reglerschaltung (CI) nach Anspruch 10 umfaßt.

## Claims

1. Excitation circuit (Tex, Ex) for an alternator, notably for motor vehicles, of the type capable of applying an indicator signal to a device (CCM) controlling the vehicle engine, the excitation circuit comprising an excitation winding (Ex), a first terminal of which is connected to earth and a controlled switch (Tex) mounted between the second terminal of the excitation winding and a positive supply voltage (B+), characterised in that it also comprises a protected inverter circuit (I), an input of which is connected to the second terminal of the excitation winding and an output of which is connected to a terminal (FR) for connection to the said control device.

2. Circuit according to Claim 1, for a control device comprising in an input stage a resistor (R1) for drawing towards a positive voltage, characterised in that the inverter circuit comprises an assembly of semiconductor components (T1, T2; D1, D2, D2) forming a current mirror with current multiplication without supply.

3. Circuit according to Claim 2, characterised in that the current mirror comprises at least one semiconductor component (T1; D1, D2) connected to the second terminal of the excitation winding (Ex) by an input resistor (Ri) and a transistor (T2) directly connected to the said connection terminal (FR).

4. Circuit according to Claim 3, characterised in that the inverter circuit (I) comprises, between the current input and output terminals of the transistor (T2), a protection diode (D3) connected so as to be reverse biased.

5. Circuit according to Claim 3 or 4, characterised in that the inverter circuit (I) comprises, between a control terminal of the transistor (T2) and a current input terminal of the transistor (T2), at least one protective Zener diode (DZ).

6. Circuit according to one of Claims 3 to 5, characterised in that the said semiconductor component at least provided comprises another transistor (T1).

7. Circuit according to Claim 6, characterised in that the two transistors (T1, T2) are of the MOS type and are connected together by their gates, and in that a zener diode (DZ1) is provided between the said gates and earth.

8. Circuit according to Claim 6, characterised in that the two transistors (T1, T2) are of the bipolar type and in that a current limitation resistor (R3) is provided between the emitter of the transistor (T2) connected to the connection terminal and earth.

9. Circuit according to Claim 6, characterised in that the said other semiconductor component at least provided comprises at least one diode (D1, D2) connected in the conducting direction between the input resistor (Ri) and earth.

10. Circuit (CI) for regulating the charging voltage of a battery by an alternator, notably in a motor vehicle, characterised in that it comprises an excitation circuit according to one of Claims 1 to 9.

11. Alternator, notably for motor vehicles, characterised in that it comprises a regulator circuit (CI) according to Claim 10.
